# EUROPEAN PATENT SPECIFICATION

(11) **EP 2 068 060 B1**
(45) Date of publication and mention of the grant of the patent: **01.12.2010**
(21) Application number: 07122369.7
(22) Date of filing: 05.12.2007
(51) Int. Cl.: F16K 31/56, F16K 17/36, F16K 31/05, F16K 31/06

(54) **Valve**
Ventil
Soupape

(43) Date of publication of application: 10.06.2009
(73) Proprietor: Pietro Fiorentini S.p.A., 36057 Arcugnano (VI) (IT)
(72) Inventor: Ravazzolo, Romano, 25128 Brescia (IT)
(74) Representative: Pulieri, Gianluca Antonio

(56) References cited:
- EP-A- 0 793 042
- EP-A- 1 538 379
- EP-A- 1 895 219
- GB-A- 2 057 639
- GB-A- 2 159 249
- JP-A- 57 208 373

## Description

The present invention relates to a fluid intercepting device, for example gas, with remote control, that is, suitable to be actuated even from a considerable distance. Document JP-57 208 373 discloses a fluid intercepting device according to the preamble of claim 1.

In the fluid intercepting device field it is known that having the possibility to remotely control the intercepting device is very important for several reasons: for example, for suddenly cutting off, from the control room, the fluid feeding to a predetermined piping even positioned in difficult to access points of the system, in the event of losses or for other safety reasons.

At the same time, the feature of some devices to be manually reset, by operating a lever close to the device itself, is appreciated.

In fact, such feature requires a technician to go to the place where the device is located, inspect the piping, repair any damages and only after that, reset the device.

If the reset may be made remotely, the maintenance technician's working condition would be highly dangerous, since even inadvertently the device may be reset from the control room, without knowing the operating situation the technician is at the moment.

The present invention relates to a fluid intercepting device with remote control and manual reset particularly effective and functional for meeting the above requirements.

The features and advantages of the intercepting apparatus according to the present invention will appear more clearly from the following description, made with reference to the annexed figures, wherein:

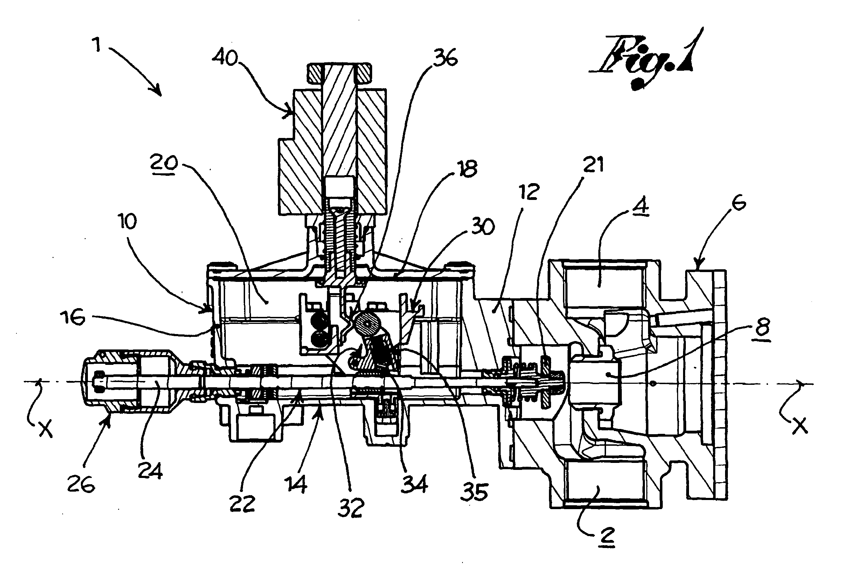

- figure 1 shows a section view of an intercepting device

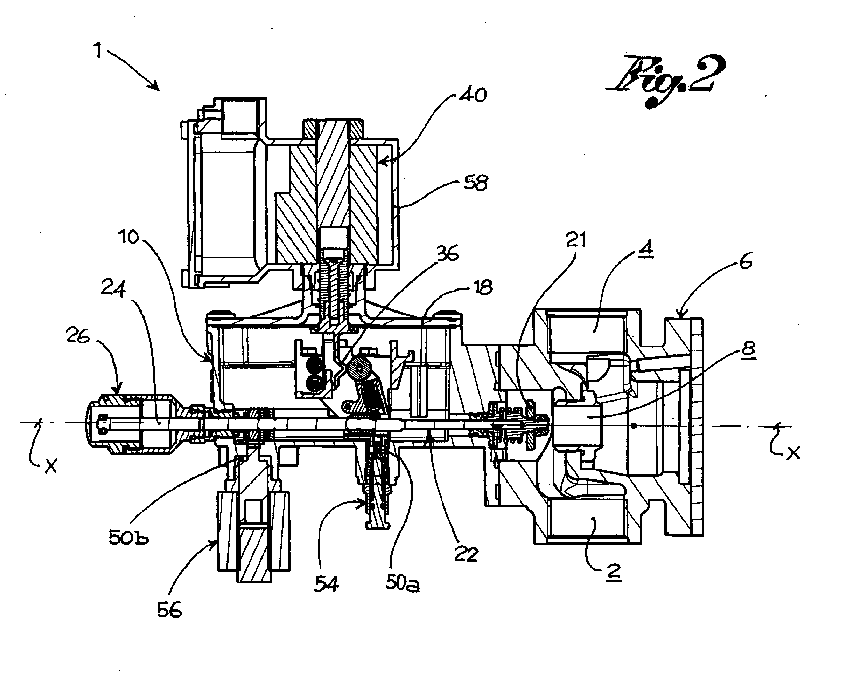

- figure 2 shows the intercepting device according to an embodiment variation;

With reference to the annexed figures, reference numeral 1 globally denotes a device for intercepting a fluid, for example gas.

Device 1 is associable to an inlet duct 2, arranged upstream, and to an outlet duct 4, arranged downstream. Said device 1 is suitable, in a closed configuration, to prevent the fluid flow from the inlet duct 2 to the outlet duct 4, whereas in an open configuration, it is suitable for allowing the fluid flow from the inlet duct 3 to the outlet duct 4.

According to an embodiment, the inlet duct 2 and the outlet duct 4 are obtained in a single body 6, wherein also a gap 8 is obtained, suitable for putting in fluid communication the inlet duct 2 with the outlet duct 4.

Gap 8 is obstructed/left free by device 1 for preventing/allowing the fluid flow.

Device 1 comprises an enclosure 10 suitable to be mechanically connected to body 6.

Moreover, enclosure 10 comprises a front wall 12, a base wall 14, a back wall 16, arranged opposite the front wall 12, and a cover 18, removably associated to the front wall 12 and to the back wall 16.

The enclosure walls internally define a space 20.

Moreover, device 1 comprises a gate 21 suitable for closing gap 8 between the inlet duct 2 and the outlet duct 4.

Moreover, device 1 comprises a shaft 22, mostly arranged inside the enclosure, in the proximity of the base wall 14 of enclosure 10, which extends along a shaft axis X-X, between a front end and a back end.

Gate 21 is fixed to the shaft at the front end.

Shaft 22 is suitable for shifting along said shaft axis X-X between an advanced position, wherein said gate 21 prevents the fluid flow from the inlet duct 2 to the outlet duct 4, and a retracted position, wherein said flow is allowed.

Said gate and said shaft constitute an example of intercepting means suitable for preventing/allowing the fluid flow from the inlet duct 2 to the outlet duct 4.

Shaft 22 comprises a protruding portion 24 which protrudes from enclosure 10, in particular from the back wall 16 thereof.

Preferably, moreover, the intercepting means comprise a knob 26, integral in shifting with shaft 22, mounted on the protruding portion 24 of shaft 22.

Moreover, device 1 comprises push means suitable for constantly influencing shaft 22 from the retracted position to the advanced position.

Preferably, said push means comprise a spring 28, arranged in compression between the front wall 12 of enclosure 10 and gate 21 fixed to the shaft.

Moreover, device 1 comprises holding means suitable, in a gripping configuration, for holding said shaft 22 in said retracted position and suitable, in a released configuration, for releasing said shaft 22 so as to move in said advanced position.

According to the embodiment, said holding means comprise:

- a carrying body 30, fixed inside enclosure 10;

- a lever 32, hinged to said carrying body 30, suitable for being rotated from a gripping position, wherein it influences shaft 22 holding it, to a release position, wherein it does not hold the shaft;

- a pin 34, fixed to said lever 32, directly gripping on said shaft 22 in said gripping position of the lever;

- a second spring 35 suitable for constantly influencing lever 32 for moving it from the gripping position to the release position;

- a cam element 36, suitable for shifting from a gripping position, wherein it influences said lever 32 holding it into said gripping position of the lever, to a release position, wherein it does not hold the lever in said gripping position.

In particular, in the gripping position, the cam element 36 is lowered and makes a support for lever 32, so that pin 34 engages shaft 22, preventing the shifting thereof towards the advanced position.

In the release position of the cam element, said element is raised so that lever 32 is without support and rotates, under the action of the second spring 35, disengaging pin 34 from shaft 22.

Without constraints, shaft 22 then shifts from the retracted position to the advanced position.

Moreover, device 1 comprises control means suitable for influencing said holding means for moving them to said released configuration.

In particular, said control means comprise remote control means 40 removably and externally associated to enclosure 10, suitable for being remotely controlled for releasing said holding means.

For example, the remote control means are suitable for receiving an electrical signal for controlling the holding means, that is, a radio signal.

The remote control means operate on said cam element 36 of the holding means.

According to the embodiment, enclosure 10 exhibits at least one auxiliary opening, for example through the base wall 14 of enclosure 10.

Said openings are suitable for making an access to at least one portion of shaft 22.

According to the embodiment, said device 1 comprises manual testing means 54 cooperating with shaft 22 through a first auxiliary opening 50a, suitable for being manually actuated by the operator for moving shaft 22 from the retracted position to the advanced position.

According to the embodiment, device 1 comprises anti-reset means 56 suitable for being actuated for preventing the manual reset of the device. Said anti-reset means cooperate with said shaft 22 through a second auxiliary opening 50b.

For example, said anti-reset means preferably electrically actuated remotely, in an anti-reset configuration are suitable for interfering with the shifting of shaft 22, for preventing the shifting of shaft 22 from the advanced position to the retracted position.

According to an even further embodiment variation, device 1 comprises covering means suitable for covering said remote control means 40 for preventing access thereof from the outside. Preferably, said covering means comprise a safety cover 58 connected to said enclosure 10, preferably to the cover thereof.

Said cover 58 is suitable for protecting the external environment, potentially explosive, in the event of explosion of the remote control means 40.

In the standard operation of the intercepting device 1 associated to body 6, a controller, for example from the control room of an industrial plant, due to a leak detected or from the control room of a board that manages the gas supply to household utilities, due to non payment of the supply, actuates the remote control means 40, disabling the gas feeding to the outlet duct 4.

Advantageously, in case of industrial plants, after checking the failure an operator in charge of maintenance can reset the gas feeding, by manually operating knob 26.

According to a further advantageous aspect, in the case of household supplies, the manual reset is disabled by actuating, from the board control room, the anti-reset means. Only when the issue has been solved, for example after the supply has been paid, the anti-reset means are deactivated thus allowing the supply reset.

Innovatively, the device described above concurrently allows disabling the fluid feeding to a piping and resetting such feeding by manually operating the device itself.

## Claims

1. Fluid intercepting device (1), for example gas, suitable for being associated to an inlet duct (2) of the fluid and to an outlet duct (4) of the fluid, wherein said device comprises:
- an enclosure (10);
- intercepting means suitable for preventing/allowing the fluid flow from the inlet duct to the outlet duct, wherein said intercepting means comprise
a) a gate (21);
a) a shaft (22), having prevailing extension along a shaft axis (X-X) between a front end and a back end, said gate being fixed to said shaft at the front end,
and wherein said shaft is suitable for shifting along said shaft axis between an advanced position, wherein said gate prevents the fluid flow from the inlet duct to the outlet duct, and a retracted position, wherein said flow is allowed;
- pushing means suitable for constantly influencing said gate from said retracted position to said advanced position;
- holding means suitable, in a gripping configuration, for holding said shaft in said retracted position and suitable, in a released configuration, for releasing said shaft so as to move in said advanced position;
- control means suitable for influencing said holding means for moving them in said released configuration, wherein said control means comprise remote control means (40) suitable for being remotely controlled for releasing said holding means;
wherein said shaft is integral in shifting to a reset portion (24) protruding from said enclosure and suitable for being operated by an operator for shifting said shaft from said advanced position to said retracted position and resetting the intercepting device to the open configuration
said device being **characterized in that**
said enclosure has a first auxiliary opening (50a) obtained through the wall thereof, said opening making an access to at least one portion of said shaft, wherein said device comprises manual testing means (54) suitable for being manually actuated by the operator for moving the shaft from the retracted position to the advanced position, said manual testing means cooperating with said holding means through said first auxiliary opening (50a);
and **in that**
said enclosure has a second auxiliary opening (50b) obtained through the wall thereof, said opening making an access to at least one portion of said shaft, wherein said device comprises anti-reset means (56) suitable for being actuated for preventing the manual reset of the device, said anti-reset means cooperate with said shaft through said auxiliary opening (50b).

2. Device according to claim 1, wherein said remote control means comprise an electrical device suitable for receiving an electrical control for releasing said holding means.

3. Device according to claim 1, wherein said remote control means comprise an electrical device suitable for receiving a radio control for releasing said holding means.

4. Device according to any one of the previous claims, wherein said remote control means are removably associated to said enclosure and arranged externally thereto.

5. Device according to any one of the previous claims, wherein said gripping portion is a protruding portion of said shaft.

6. Device according to claim 5, wherein said intercepting means comprise a knob (26) arranged externally to said enclosure, integral in shifting with said shaft.

7. Device according to claim 1, wherein said anti-reset means are suitable, in an anti-reset configuration, for interfering with the shifting of the shaft, for preventing the shifting of the shaft from the advanced position to the retracted position.

8. Device according to claim 7, wherein said anti-reset means are electrically actuated remotely.

9. Device according to any one of the previous claims, comprising covering means suitable for covering said control means for preventing access thereto from the outside.

10. Device according to claim 9, wherein said covering means comprise a safety cover (58) connected to said enclosure, for protecting the external environment, potentially explosive, in the event of explosion of said remote control means (40).

11. Device according to any one of the previous claims, wherein said holding means comprise:
- a carrying body (30), fixed inside the enclosure;
- a lever (32), hinged to said carrying body, suitable for being rotated from a gripping position, wherein it influences the shaft holding it, to a release position, wherein it does not hold the shaft;
- a pin (34), fixed to said lever, directly gripping on said shaft in said gripping position of the lever;
- a second spring (35) suitable for influencing the lever (32) for moving it in said release position;
- a cam element (36), suitable for shifting from a gripping position, wherein it influences said lever holding it into said gripping position of the lever, to a release position, wherein it does not hold the lever in said gripping position.

12. Device according to claim 11, wherein said remote control means (40) are suitable for operating on said cam element.

13. Device according to any one of the previous claims, wherein said pushing means comprise a first spring (28).

## Patentansprüche

1. Abstell- bzw. Unterbrechungsvorrichtung (1) zum Beispiel für Gas, die geeignet ist, mit einem Einlasskanal (2) des Fluids und mit einem Auslasskanal (4) des Fluids verbunden zu werden, wobei die Vorrichtung umfasst:
- ein Gehäuse (10);
- ein Abstellmittel, das geeignet ist, den Fluidstrom von dem Einlasskanal zu dem Auslasskanal zu verhindern/zuzulassen, wobei das Abstellmittel umfasst:
a) eine Sperre bzw. einen Verschluss (21);
b) ein Schaft (22) mit einer vorherrschenden Ausdehnung entlang einer Schaftachse (X-X) zwischen einem Vorderende und einem Hinterende, wobei der Verschluss an dem Vorderende an dem Schaft befestigt ist,
und wobei der Schaft geeignet ist, entlang der Schaftachse zwischen einer vorgerückten Position, in welcher der Verschluss verhindert, dass Fluid von dem Einlasskanal zu dem Auslasskanal strömt, und einer zurückgezogenen Position, in welcher die genannte Strömung zugelassen wird, verschoben zu werden;
- Schiebemittel, die geeignet sind, den Verschluss ständig aus der zurückgezogenen Position in die vorgerückte Position zu beeinflussen;
- Haltemittel, die geeignet sind, in einem Greifaufbau den Schaft in der zurückgezogenen Position zu halten, und geeignet sind, in einem gelösten Aufbau, den Schaft zu lösen, um ihn in die vorgerückte Position zu bewegen;
- Steuermittel, die geeignet sind, die Haltemittel zu beeinflussen, um sie in den gelösten Aufbau zu bewegen, wobei die Steuermittel Fernbedienungsmittel (40) umfassen, die geeignet sind, ferngesteuert zu werden, um die Haltemittel zu lösen;
wobei der Schaft beim Verschieben integral mit einem Rücksetzabschnitt (24) ist, der von dem Gehäuse vorsteht und geeignet ist, von einem Bediener betätigt zu werden, um den Schaft von der vorgerückten Position zu der zurückgezogenen Position zu verschieben und die Abstellvorrichtung in den offenen Aufbau zurückzusetzen, wobei die Vorrichtung **dadurch gekennzeichnet ist, dass** das Gehäuse eine erste Hilfsöffnung (50a) hat, die durch seine Wand erhalten wird, wobei die Öffnung einen Zugang zu wenigstens einem Abschnitt des Schafts bildet, wobei die Vorrichtung manuelle Testmittel (54) umfasst, die geeignet sind, von dem Bediener manuell betätigt zu werden, um den Schaft aus der zurückgezogenen Position in die vorgerückte Position zu bewegen, wobei die manuellen Testmittel durch die erste Hilfsöffnung (50a) mit den Haltemitteln zusammenwirken;
und dadurch dass
das Gehäuse eine zweite Hilfsöffnung (50b) hat, die durch seine Wand erhalten wird, wobei die Öffnung einen Zugang zu wenigstens einem Abschnitt des Schafts bildet, wobei die Vorrichtung Rücksetzschutzmittel (56) umfasst, die geeignet sind, betätigt zu werden, um das manuelle Zurücksetzen der Vorrichtung zu verhindern, wobei die Rücksetzschutzmittel durch die Hilfsöffnung (50b) mit dem Schaft zusammenwirken.

2. Vorrichtung nach Anspruch 1, wobei die Fernbedienungsmittel eine elektrische Vorrichtung umfassen, die geeignet ist, eine elektrische Steuerung zum Lösen der Haltemittel zu empfangen.

3. Vorrichtung nach Anspruch 1, wobei die Fernbedienungsmittel eine elektrische Vorrichtung umfassen, die geeignet ist, eine Funksteuerung zum Lösen der Haltemittel zu empfangen.

4. Vorrichtung nach einem der vorhergehenden Ansprüche, wobei die Fernbedienungsmittel abnehmbar mit dem Gehäuse verbunden sind und außerhalb daran angeordnet sind.

5. Vorrichtung nach einem der vorhergehenden Ansprüche, wobei der Greifabschnitt ein vorstehender Abschnitt des Schafts ist.

6. Vorrichtung nach Anspruch 5, wobei die Abstellmittel einen Drehknopf bzw. Griff (26) umfassen, der außerhalb des Gehäuses angeordnet ist, der bei der Verschiebung integral mit dem Schaft ist.

7. Vorrichtung nach Anspruch 1, wobei die Rücksetzschutzmittel geeignet sind, in einem Rücksetzschutzaufbau die Verschiebung des Schafts zu stören, um die Verschiebung des Schafts von der vorgerückten Position zu der zurückgezogenen Position zu verhindern.

8. Vorrichtung nach Anspruch 7, wobei die Rücksetzschutzmittel elektrisch fernbedient werden.

9. Vorrichtung nach einem der vorhergehenden Ansprüche, die Abdeckmittel umfasst, die geeignet sind, um die Steuermittel zu bedecken, um den Zugang zu ihnen von außen zu verhindern.

10. Vorrichtung nach Anspruch 9, wobei die Abdeckmittel eine Sicherheitsabdeckung (58) umfassen, die mit dem Gehäuse verbunden ist, um die äußere Umgebung, die möglicherweise explosiv ist, im Fall der Explosion des Fernbedienungsmittels (40) zu schützen.

11. Vorrichtung nach einem der vorhergehenden Ansprüche, wobei die Haltemittel aufweisen:
- einen Trägerkörper (30), der im Inneren des Gehäuses befestigt ist;
- einen Hebel (32), der an den Trägerkörper eingehängt ist, der geeignet ist, aus einer Greifposition, in welcher er den ihn haltenden Schaft beeinflusst, in eine Löseposition, in welcher er den Schaft nicht hält, gedreht zu werden;
- einen Stift (34), der an dem Hebel befestigt ist, der in der Greifposition des Hebels direkt auf den Schaft greift;
- eine zweite Feder (35), die geeignet ist, den Hebel (32) zu beeinflussen, um ihn in die Löseposition zu bewegen;
- ein Nockenelement (36), das geeignet ist, aus einer Greifposition, in welcher es den Hebel beeinflusst, wobei es ihn in der Greifposition des Hebels hält, zu einer Löseposition, in welcher es den Hebel nicht in der Greifposition hält, zu verschieben.

12. Vorrichtung nach Anspruch 11, wobei die Fernbedienungsmittel (40) geeignet sind, auf das Nockenelement einzuwirken.

13. Vorrichtung nach einem der vorhergehenden Ansprüche, wobei die Schiebemittel eine erste Feder (28) umfassen.

## Revendications

1. Dispositif d'interception de fluide (1), par exemple un gaz, approprié pour être associé à un conduit d'entrée (2) du fluide et à un conduit de sortie (4) du fluide, dans lequel ledit dispositif comprend;
- une enceinte (10);
- des moyens d'interception appropriés pour empêcher/permettre l'écoulement du fluide à partir du conduit d'entrée vers le conduit de sortie, dans lequel lesdits moyens d'interception comprennent:
a) un opercule (21);
b) une tige (22), qui présente une extension principale le long d'un axe de tige (X-X) entre une extrémité avant et une extrémité arrière, ledit opercule étant fixé à ladite tige au niveau de l'extrémité avant ;
et dans lequel ladite tige est appropriée pour se déplacer le long dudit axe de tige entre une position déployée, dans laquelle ledit opercule empêche l'écoulement du fluide à partir du conduit d'entrée vers le conduit de sortie, et une position rétractée, dans laquelle ledit écoule-ment est permis;
- des moyens de poussée appropriés pour influencer de manière cons-tante ledit opercule à partir de ladite position rétractée vers ladite position déployée;
- des moyens de maintien appropriés pour, dans une configuration de préhension, maintenir ladite tige dans ladite position rétractée et pour, dans une configuration libérée, libérer ladite tige afin qu'elle se déplace vers ladite position déployée;
- des moyens de commande appropriés pour influencer lesdits moyens de maintien afin de les déplacer dans ladite configuration libérée, dans lequel lesdits moyens de commande comprennent des moyens de commande à distance (40) appropriés pour être commandés à distance de façon à libérer lesdits moyens de libération;
dans lequel ladite tige se déplace en même temps vers une partie de réinitialisation (24) qui fait saillie de ladite enceinte et est appropriée pour être actionnée par un opérateur pour déplacer ladite tige à partir de ladite position déployée vers ladite position rétractée et pour réinitialiser le dispositif d'interception à la configuration ouverte;
ledit dispositif étant **caractérisé en ce que**:
ladite enceinte présente une première ouverture auxiliaire (50a) obtenue à travers la paroi de celle-ci,
ladite ouverture procurant un accès au moins à une partie de ladite tige, dans lequel ledit dispositif comprend des moyens d'essai manuels (54) appropriés pour être actionnés de manière manuelle par l'opérateur de façon à déplacer la tige à partir de la position rétractée vers la position déployée, lesdits moyens d'essai manuels coopérant avec lesdits moyens de maintien par l'intermédiaire de ladite première ouverture auxiliaire (50a) ;
et **en ce que** ladite enceinte présente une seconde ouverture auxiliaire (50b) obtenue à travers la paroi de celle-ci, ladite ouverture procurant un accès au moins à une partie de ladite tige, dans lequel ledit dispositif comprend des moyens d'empêchement de réinitialisation (56) appropriés pour être actionnés de façon à empêcher la réinitiali-sation manuelle du dispositif, lesdits moyens d'empêchement de réinitialisation coopèrant avec ladite tige à travers ladite ouverture auxiliaire (50b).

2. Dispositif selon la revendication 1, dans lequel lesdits moyens de commande à distance comprennent un dispositif électrique approprié pour recevoir une commande électrique afin de libérer lesdits moyens de maintien.

3. Dispositif selon la revendication 1, dans lequel lesdits moyens de commande à distance comprennent un dispositif électrique approprié pour recevoir une commande radio afin de libérer lesdits moyens de maintien.

4. Dispositif selon l'une quelconque des revendications précédentes, dans lequel lesdits moyens de commande à distance sont associés de manière amovible à ladite enceinte et sont disposés à l'extérieur de celle-ci.

5. Dispositif selon l'une quelconque des revendications précédentes, dans lequel ladite partie de préhension est une partie qui fait saillie de ladite tige.

6. Dispositif selon la revendication 5, dans lequel lesdits moyens d'interception comprennent un bouton (26) disposé à l'extérieur de ladite enceinte et qui se déplace d'une pièce avec ladite tige.

7. Dispositif selon la revendication 1, dans lequel lesdits moyens d'empêchement de réinitialisation sont appropriés pour, dans une configuration d'empêchement de réinitialisation, entraver le déplace-ment de la tige, de façon à empêcher le déplacement de la tige à partir de la position déployée vers la position rétractée.

8. Dispositif selon la revendication 7, dans lequel lesdits moyens d'empêchement de réinitialisation sont actionnés à distance de manière électrique.

9. Dispositif selon l'une quelconque des revendications précédentes, comprenant des moyens de couverture appropriés pour couvrir lesdits moyens de commande de façon à empêcher d'y accéder à partir de l'extérieur.

10. Dispositif selon la revendication 9, dans lequel lesdits moyens de couverture comprennent une couverture de sécurité (58) reliée à ladite enceinte de façon à protéger l'environnement extérieur, potentielle-ment explosif, en cas d'explosion desdits moyens de commande à distance (40).

11. Dispositif selon l'une quelconque des revendications précédentes, dans lequel lesdits moyens de maintien comprennent:
- un corps porteur (30), fixé à l'intérieur de l'enceinte;
- un levier (32) articulé sur ledit corps porteur, approprié pour être tourné à partir d'une position de préhension dans laquelle il influence la tige qui la maintient vers une position de libération où la tige n'est pas maintenue;
- une broche (34), fixée audit levier, en prise directe sur ladite tige dans ladite position de préhension du levier;
- un deuxième ressort (35) approprié pour influencer le levier (32) pour qu'il se déplace dans ladite position de libération;
- un élément de came (36) approprié pour se déplacer à partir d'une position de préhension dans laquelle il influence ledit levier qui le maintient dans ladite position de préhension du levier, vers une position de libération où le levier n'est pas maintenu dans ladite position de préhension.

12. Dispositif selon la revendication 11, dans lequel lesdits moyens de commande à distance (40) sont appropriés pour actionner ledit élément de came.

13. Dispositif selon l'une quelconque des revendications précédentes, dans lequel lesdits moyens de poussée comprennent un premier ressort (28).
